# EUROPEAN PATENT APPLICATION

(11) **EP 4 371 919 A1**
(43) Date of publication of application: **22.05.2024**
(21) Application number: 23218421.8
(22) Date of filing: 07.03.2022
(51) Int. Cl.: B65H 49/28, B65H 49/32, B65H 75/24, F16L 1/20, H02G 1/10

(54) **CABLE CAROUSEL FOR HEAVY-DUTY ELECTRIC CABLE OR UMBILICAL**

(30) Priority: 09.03.2021 NL 2027729
(62) Divisional of application: 22710760.4
(71) Applicant: Mammoet Holding B.V., 3528 AE Utrecht (NL)
(72) Inventor: HELMENS, Wessel, 3528 AE Utrecht (NL); VAN WEES,, Johannes Marinus Adrianus, 3528 AE Utrecht (NL)
(74) Representative: van Breda, Jacobus

(57) **Abstract**

Cable carousel comprising a support grid (1) and upstanding supports (2, 2') on the support grid (1) that confine a region in which a heavy-duty electric cable or umbilical can be received and supported by the support grid (1), wherein the upstanding supports (2, 2') are placeable on the support grid (1) at preselected positions defining both an inner barrier (7) and an outer barrier (8) so as to tailor the cable carousel to a dimension between said inner and outer barriers (7, 8) which is necessary and sufficient to store a predetermined length of said electric cable or umbilical, wherein the cable carousel is provided with shores (9) connecting the inner barrier (7) to the support grid (1).

## Description

The invention relates to a cable carousel comprising a support grid and upstanding supports on the support grid that confine a region in which a heavy-duty electric cable or umbilical can be received and supported by the support grid, wherein the upstanding supports are placeable on the support grid at preselected positions defining both an inner barrier and an outer barrier so as to tailor the cable carousel to a dimension between said inner and outer barriers which is necessary and sufficient to store a predetermined length of said cable. The cable carousel is provided with shores connecting the inner barrier to the support grid.

Such a cable carousel is disclosed in EP 3 260 751 and is used when a heavy-duty electric cable is to be provided between an offshore windmill installation and an intermediate electrical transfer station, as well as when such a heavy-duty electric cable is to be provided between such an electrical transfer station and an onshore connection to the electric grid.

The known cable carousel of EP 3 260 751 can be tailored with dimensions to suit the particular heavy-duty electric cable that has to be supported and stored in or on the cable carousel. The costs of an offshore windmill park are for the larger part attributable to the costs of the heavy-duty electric cables to be installed and the cable carousels to be used for transport, the cost of shipping the cable carousel with the cable, and the labour costs of putting the heavy-duty electric cables in place.

In the state-of-the-art wherein an heavy-duty electric cable or umbilical is to be collected from a manufacturing site overseas, a ship with an empty cable carousel has to travel to the manufacturing site, upon arrival at the manufacturing site the electric cable or umbilical must be wound onto the cable carousel and embarked on the ship, and the ship can then travel back with the carousel provided with the electric cable or umbilical to the intended destination where the heavy-duty electric cable or umbilical is intended to be used. All in all this is an expensive routine since it involves much time to embark the cable carousel with the electric cable or umbilical on the ship, the traveling time of the ship, and in general the idle time of the ship. This idle time not only relates to the time required for embarking the cable carousel with the cable, but also for disembarking the cable carousel with the cable after having arrived at the destination where the heavy electric cable or umbilical must be put to use.

It is an object of the invention to make embarking and disembarking of the cable carousel with the cable an easier task which can be accomplished quicker.

According to the invention a cable carousel is proposed in accordance with one or more of the appended claims.

In a first aspect of the invention the support grid is equipped to cooperate with a yoke of a transport vessel, which is arranged to receive a locking pile that is provided through aligned apertures of the connecting organ and the support grid. This promotes the robustness of the construction. All horizontal forces that occur during sea transport are absorbed by the relatively flexible construction with the inner barrier and the shores. These forces are eventually discharged through the locking pile in the middle to the pontoon or transport vessel on which the support grid is provided. Accordingly the invention is also embodied in a vessel provided with a yoke which is equipped to receive the locking pile that is provided through the aligned apertures of the connecting organ and the support grid.

Preferably the shores are connectable to the inner barrier at one of a series of preselected positions above the support grid. This enables, next to a course adjustment of the length of the shores themselves, a finetuning to the required dimensions of the cable carousel. This enables tailoring of the cable carousel to the length of the cable to be transported. Moreover the footprint area that is required for placing the carousel with the cable on the vessel remains limited to the very least that is required for this purpose.

In another aspect of the invention which can be applied independently or in combination with the feature mentioned in the previous paragraph, reinforcement beams are provided within the support grid, which beams are regularly distributed in a star pattern and are connected to a central connecting point within the support grid, which is positioned on a virtual vertical axis which is encircled by the inner and outer barriers. This construction is particularly suitable for transport of very heavy cables due to their extended lengths, and which are accordingly more heavy than normal.

It is preferred that the shores are regularly distributed in a region confined by the inner barrier. This provides a more or less uniform security provision that fixes the cable carousel with the cable in all directions, so that transport the vessel motions of pitch, jaw and heave will not adversely affect the security of mounting of the cable carousel with the cable on the vessel.

It is further preferred that the shores are extendable and fixable at a preselected length. This enables, again with limited means, that the cable carousel to be used for transporting a cable can have different dimensions tailored to the length of the cable at hand.

In another aspect of the invention which can be applied in combination with the preamble of claim 1, and wherein the shores connect to a connecting organ which is centrally provided within the cable carousel, and wherein the connecting organ is connectable or connected to the support grid, it is preferred that the connecting organ and the support grid are each provided with an aperture, wherein the aperture of the connecting organ and the aperture of the support grid are alignable, and said apertures are equipped to receive a locking pile. By applying this feature the cable carousel with the cable stored in the carousel can be easily secured.

As already mentioned above, in a particular aspect of the invention reinforcement beams are provided within the support grid that are regularly distributed in a star pattern, and said star-pattern-beams are connected to a central connecting point within the support grid positioned on a virtual vertical axis which is encircled by the inner and outer barriers. This construction is particularly suitable for heavy cables due to their extensive lengths. It is then preferable that the central connecting point is positioned in line with and below the connecting organ which is provided on the support grid.

To promote the sturdiness and the robustness of the construction it is further preferable that the inner barrier is connected with horizontal beams to the connecting organ immediately above the support grid.

Advantageously the horizontal beams are provided in a star pattern above the support grid, corresponding to the star pattern of the reinforcement beams within the support grid.

It is further preferred that the horizontal beams have a preselected length and that their connection with the inner barrier and the connecting organ is dismountable. This supports that the dimensions of the cable carousel can be accommodated to different dimensions of cables.

Preferably the inner barrier is provided with horizontal bars that are parallel to and distant from the support grid, and connected to the locking pile mounted fixed or removably in the connecting organ. This further promotes the sturdiness and the robustness of the construction.

It is also preferred that the horizontal bars are extendable and fixable at a preselected length. This also supports the adjustment of the cable carousel to different dimensions of the cable to be transported.

Preferably the support grid is assembled from bottom supports, wherein said bottom supports and/or the upstanding supports may be assembled together with dimensions not exceeding the dimensions of a standard sea container. This enables that the respective parts of the cable carousel can be easily shipped at low costs, without need to reserve a particular ship for this purpose wherein unused space is occupied by the cable carousel as is the case in the prior art. Only when the parts of the cable carousel of the invention has arrived at the manufacturing site of the heavy-duty electric cable or umbilical, the cable carousel can be assembled and the electric cable or umbilical can be provided thereon, and only after that time it is necessary to avail of a standard cargo vessel or transportation barge for transporting the cable carousel with the electric cable or umbilical to its destination.

Preferably the support grid is embodied by a series of load carrying movable vehicles, preferably self-propelled modular trailers. This makes winding and unwinding of the heavy-duty electric cable or umbilical a relatively easy task by the movable vehicles appropriately driving around in circles.

The invention will hereinafter be further elucidated with reference to the drawing of an exemplary embodiment of an apparatus according to the invention that is not limiting as to the appended claims.

In the drawing:
- figures 1A, 1B and 1C show an assembled cable carousel according to the invention in an isometric view, a top view and a front view respectively, but without electrical cable or umbilical;
- figure 2 shows the assembled cable carousel of figure 1 supporting an electrical cable or an umbilical;
- figure 3 shows an example of a self-propelled modular trailer which may form a part of the support grid of the cable carousel of the invention;
- figure 4 shows a stack of bottom supports which can be assembled into the support grid, wherein the stack of bottom supports is assembled with twist locks and has dimensions not exceeding those of a standard sea container;
- figure 5 shows a detail of a twist lock connecting two bottom supports;
- figure 6 shows an assembled cable carousel according to the invention placed on a series of adjacent self-propelled modular trailers;
- figure 7 shows a detail of a twist lock;
- figure 8 provides an isometric view at a radial section taken from and through the center of the cable carousel of the invention;
- figures 9A and 9B show a top view and sectional view pertaining to the cable carousel of the invention with a minimum radius of an inner barrier of the cable carousel;
- figures 10A and 10B show a top view and sectional view pertaining to the cable carousel of the invention with a maximum radius of an inner barrier of the cable carousel;
- figure 11 shows a detail of a central portion of the cable carousel of the invention; and
- figure 12 shows a further detail of a central portion of the cable carousel of the invention.

Whenever in the figures the same reference numerals are applied, these numerals refer to the same parts.

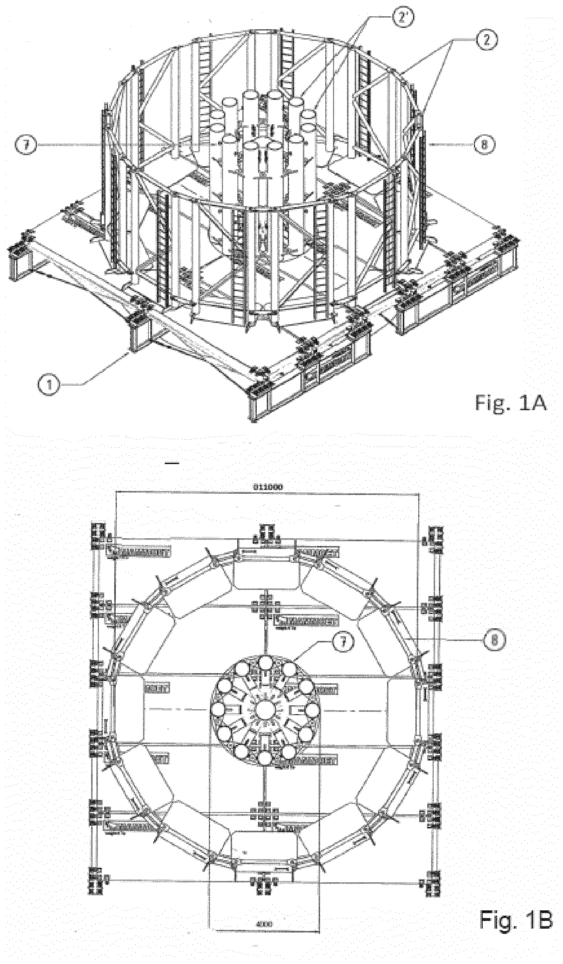

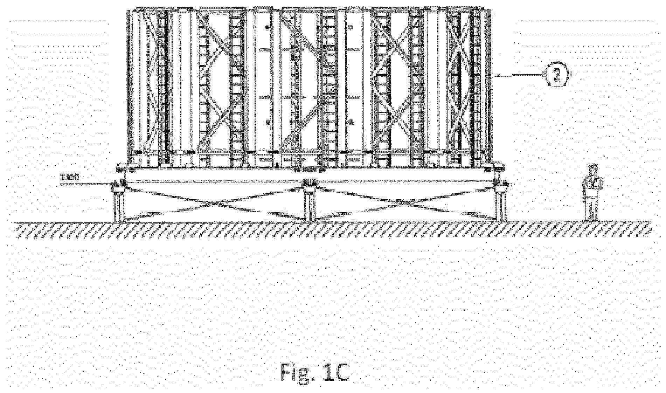

In figures 1A-1C an overview picture is provided of a cable carousel for heavy-duty electric cable or umbilical, wherein said cable carousel comprises a support grid 1 and upstanding supports 2, 2' on the support grid 1 at preselected positions defining both an inner barrier 7 and an outer barrier 8 so as to tailor the cable carousel to a dimension between said inner and outer barriers 7, 8 which is necessary and sufficient to store a predetermined length of electric cable or umbilical (not shown) to be received and supported by the support grid 1.

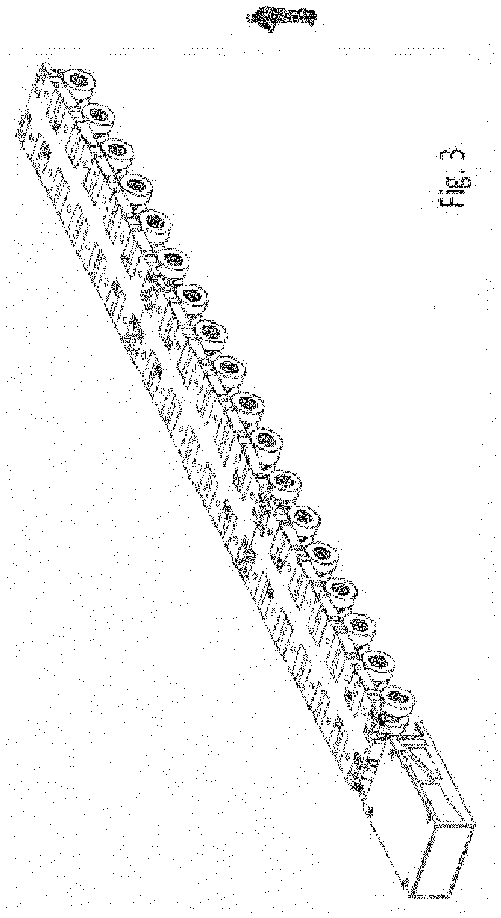

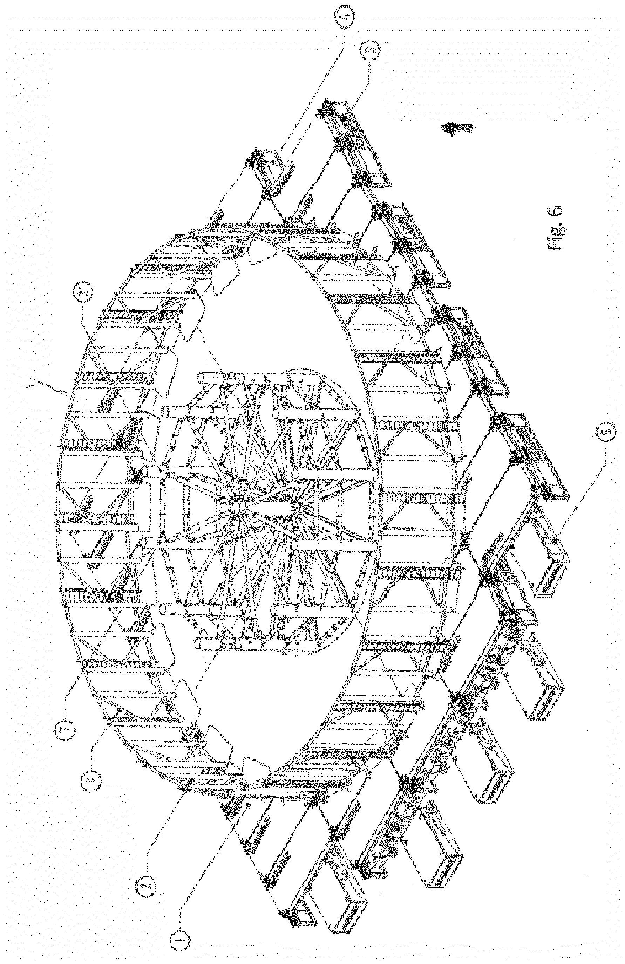

Figure 6 shows the cable carousel of the invention while it is supported by a series of load carrying movable vehicles, which are preferably self-propelled modular trailers 5. Figure 3 shows an example of a single one of such a self-propelled modular trailer.

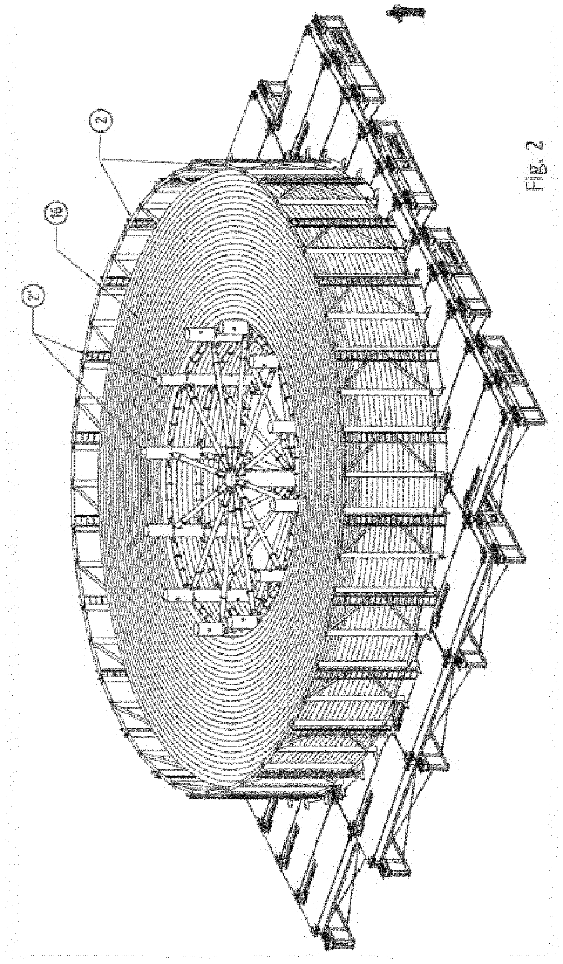

Figure 2 depicts the cable carousel of the invention in which a heavy-duty electric cable or umbilical 16 is received.

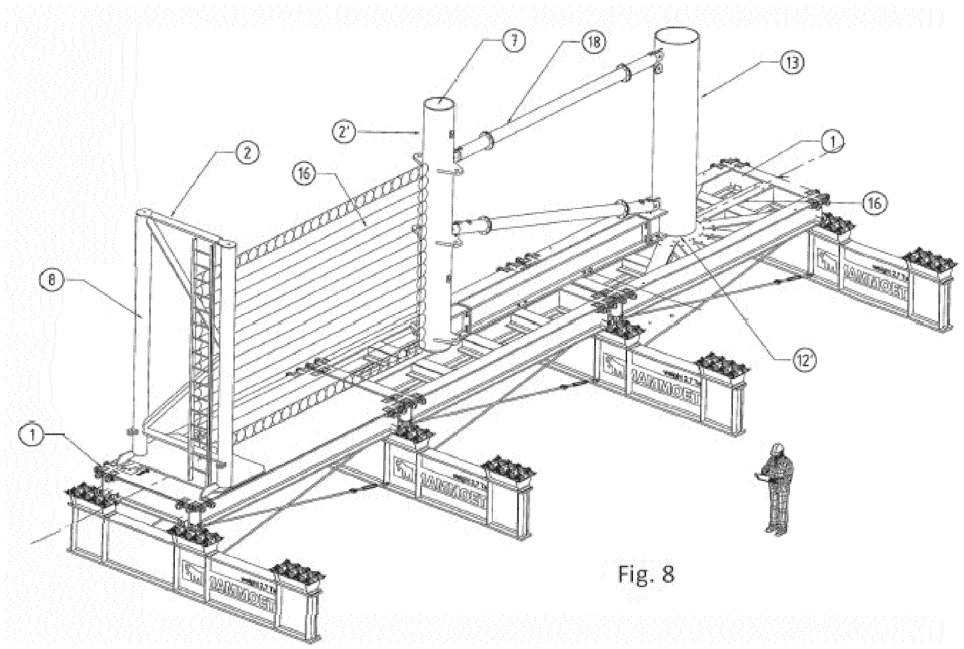

The upstanding supports 2, 2' that are provided on the support grid 1 -also see figure 8- define a circular region between an inner circumference in the middle of the support grid 1 which is provided by upstanding supports 2' placed near the center of the support grid 1 which define the inner barrier 7, and a series of upstanding supports 2 which define the outer barrier 8 of a circular region between said barriers. In this circular region between the inner barrier 7 and the outer barrier 8 the heavy-duty electric cable or umbilical 16 can be stored.

The upstanding supports 2, 2' are removably mounted on the support grid 1. It will thus be clear that the upstanding supports 2, 2' are placeable on the support grid 1 at preselected positions so as to tailor the cable carousel of the invention to a dimension which is necessary and sufficient to store a predetermined length of the heavy-duty electric cable or umbilical.

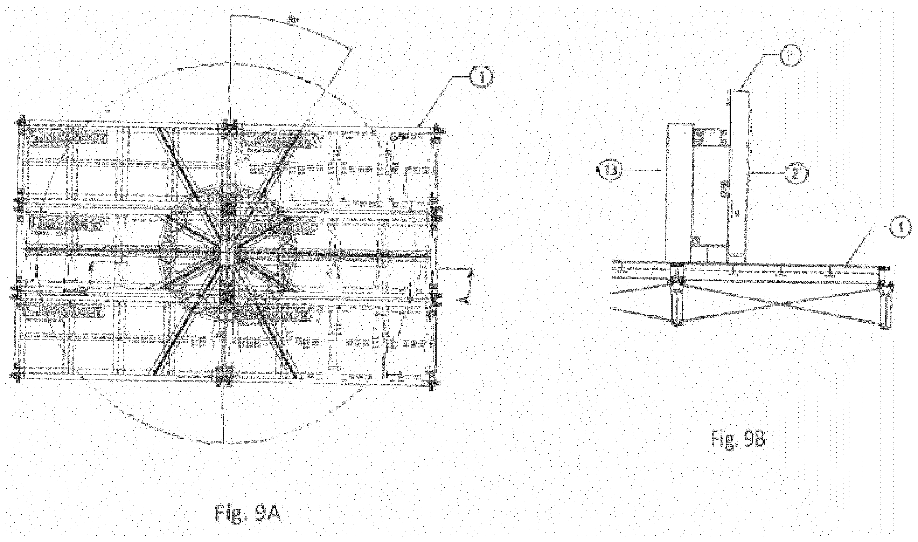

Figures 9A and 9B show an embodiment wherein the cable carousel is having a minimal radius of the inner barrier 7 with reference to a central locking pile 13 which may be fixedly or removably mounted on the support grid 1.

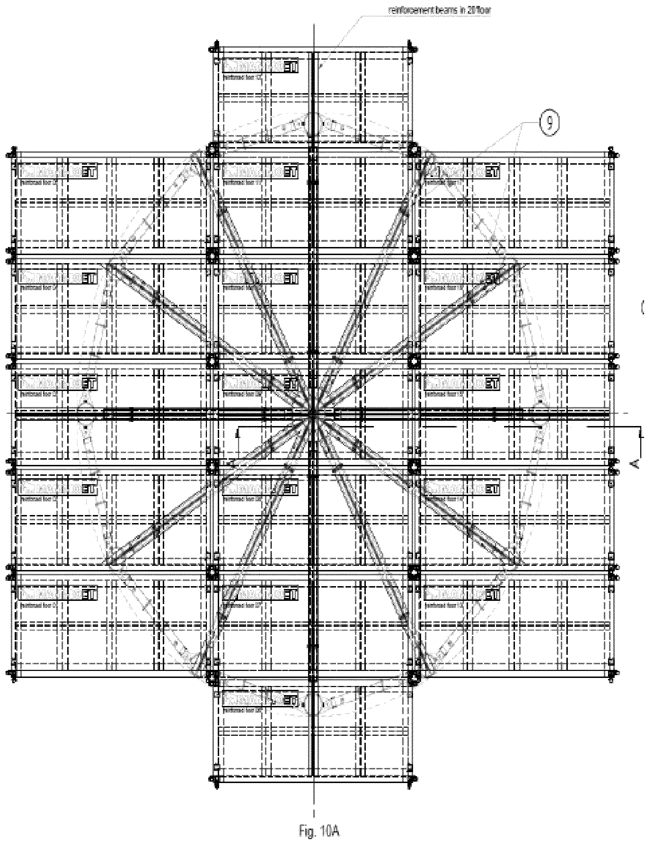

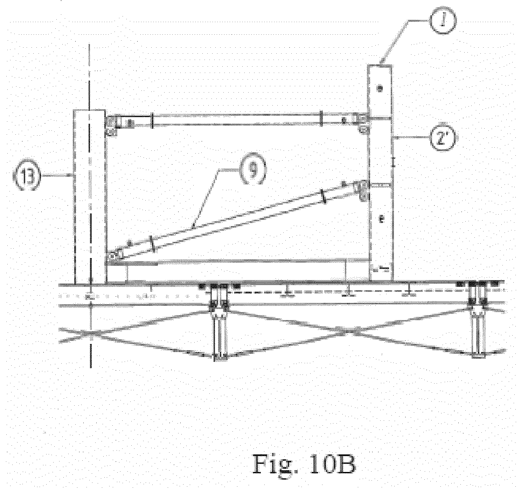

Figures 10A and 10B show an embodiment wherein the cable carousel is having a maximum radius of the inner barrier 7 with reference to the central locking pile 13 which may be fixedly or removably mounted on the support grid 1.

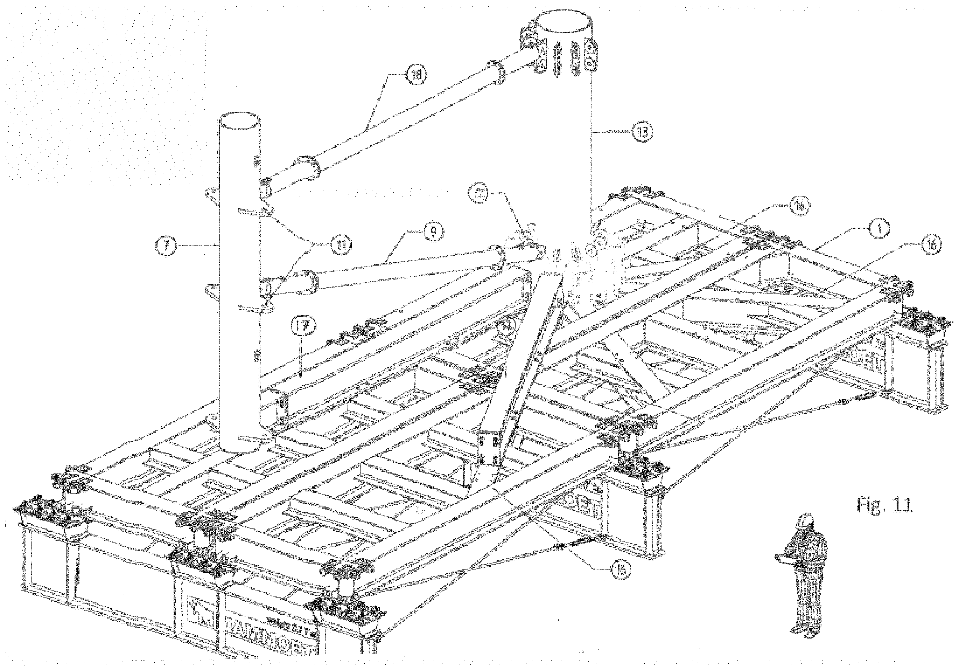

Figure 8 and 11 show that within the support grid 1 reinforcement beams 16 are provided. These reinforcement beams 16 are regularly distributed in a star pattern. The star-pattern-beams 16 are connected to a central connecting point 12' (fig. 8) within the support grid 1. This central connecting point 12' is positioned on a virtual vertical axis centrally in the cable carrousel of the invention. The vertical axis is centrally positioned and encircled by the inner and outer barriers 7, 8. In particular the central connecting point 12' is positioned in line with and below the connecting organ 12 which is provided on the support grid 1 of the cable carousel. This may be best understood with reference to figure 11 showing a number of reinforcement beams 16 and the connecting organ 12, below and around which the reinforcement beams 16 are provided in a regular starshaped pattern.

The adaptability of the cable carousel of the invention to different dimensions and lengths of the electrical cable to be transported, while the cable carousel of the invention still provides a reliable and robust storage facility will be explained hereinafter with reference to figures 8, 11 and 12. These figures 8, 11 and 12 show that the inner barrier 7 is connected with horizontal beams 17 immediately above the support grid 1 to the connecting organ 12.

The horizontal beams 17 are also provided in a star pattern and are placed correspondingly above the star pattern of the reinforcement beams 16 within the support grid 1.

The horizontal beams 17 have a preselected length and their connection with the inner barrier 7 and the connecting organ 12 is dismountable.

Figures 8 and 11 further show that the inner barrier 7 is provided with horizontal bars 18 that are parallel to and distant from the support grid 1, and that the horizontal bars 18 are connected to a locking pile 13 which can be fixed or removably mounted in the connecting organ 12. The horizontal bars 18 are extendable and fixable at a preselected length. The locking pile 13 will be further discussed hereinafter.

In one aspect the cable carousel of the invention may be provided with shores 9 connecting the inner barrier 7 to the support grid 1. Figures 2 and 10A depict that the shores 9 are regularly distributed in the inner region confined by the inner barrier 7. Preferably the shores 9 are extendable and fixable at a preselected length. Further the shores 9 are connectable to the inner barrier 7 at one of a series of preselected positions 11 above the support grid 1.

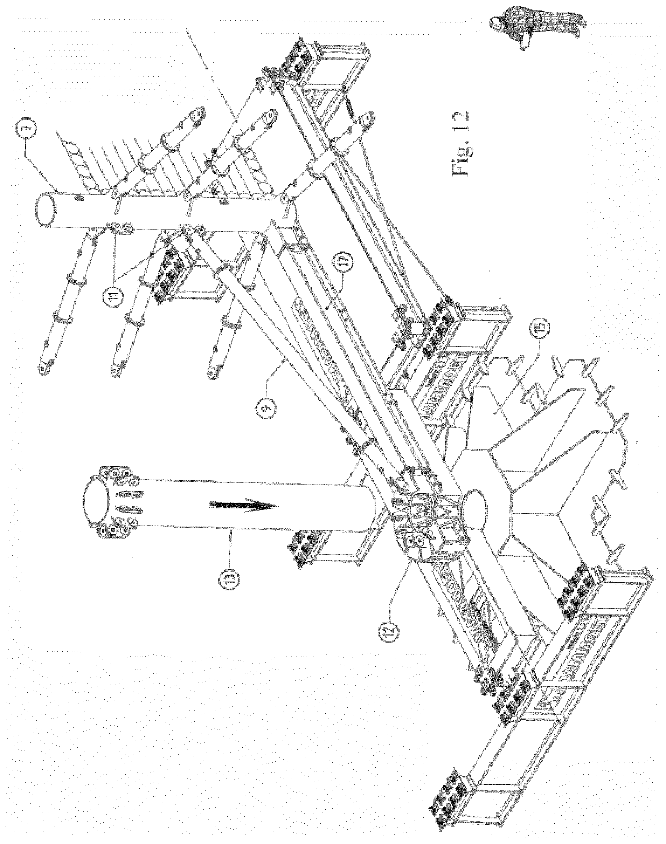

It is most clearly shown in figures 11 and 12 that the shores 9 connect to a connecting organ 12 which is centrally provided within the cable carousel on the support grid 1. This connecting organ 12 is in turn connectable or connected to the support grid 1 (not shown in figure 12). The connecting organ 12 and the support grid 1 are each provided with an aperture, wherein the aperture of the connecting organ 12 and the aperture of the support grid 1 are alignable, and said apertures are equipped to receive a locking pile 13.

Figure 12 further shows that below the support grid 1 of the cable carrousel a yoke 15 is provided which forms part of a transport vessel. The yoke 15 is equipped to receive the locking pile 13 that is provided through the aligned apertures of the connecting organ 12 and the support grid 1. All horizontal forces that occur during sea transport of the cable carousel and cable are thus absorbed by the relatively flexible construction of the carousel with the inner barrier 7 and the shores 9. These forces are eventually discharged through the locking pile 13 and transferred to the yoke 15 of the pontoon or transport vessel on which the support grid 1 is provided.

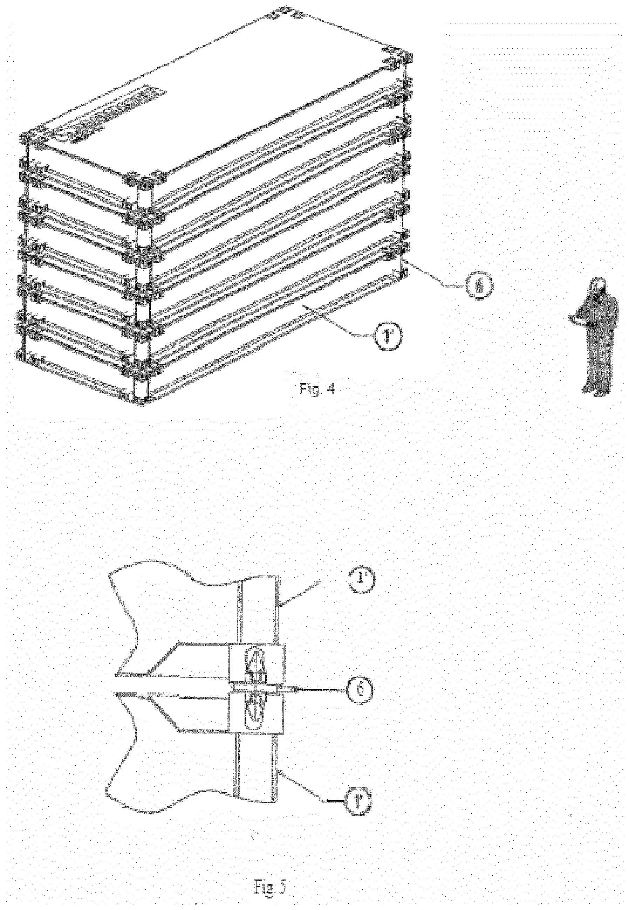

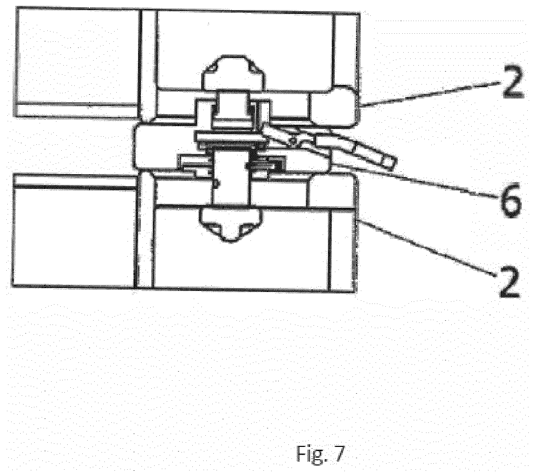

Another aspect of the invention is that preferably the support grid 1 is assembled from separable bottom supports 1', and that said bottom supports 1' and/or the upstanding side supports 2 may be assembled together with dimensions not exceeding the dimensions of a standard sea container. An example thereof is shown in figure 4 which shows a stack of bottom supports 1' forming assembly parts of the support grid 1, and which bottom supports 1' assembled together with twist locks 6 provide a stack of bottom supports 1' with dimensions not exceeding those of a standard sea container. A detail of the connection between two bottom supports 1' with a twist lock 6 is shown in figure 5. Figure 7 shows a twist lock 6.

Embodiments of the present invention can include every combination of features that are disclosed herein independently from each other. Although the invention has been discussed in the foregoing with reference to an exemplary embodiment of the cable carousel of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Cable carousel comprising a support grid (1) and upstanding supports (2, 2') on the support grid (1) that confine a region in which a heavy-duty electric cable or umbilical can be received and supported by the support grid (1), wherein the upstanding supports (2, 2') are placeable on the support grid (1) at preselected positions defining both an inner barrier (7) and an outer barrier (8) so as to tailor the cable carousel to a dimension between said inner and outer barriers (7, 8) which is necessary and sufficient to store a predetermined length of said cable, wherein the cable carousel is provided with shores (9) connecting the inner barrier (7) to the support grid (1), **characterized in that** the support grid (1) is equipped to cooperate with a yoke (15) of a transport vessel, which is arranged to receive a locking pile (13) that is provided through aligned apertures of the connecting organ (12) and the support grid (1).

2. Cable carousel according to claim 1, **characterized in that** the shores (9) are connectable to the inner barrier (7) at one of a series of preselected positions (11) above the support grid (1).

3. Cable carousel according to claim 1 or 2, **characterized in that** the shores (9) are regularly distributed in a region confined by the inner barrier (7).

4. Cable carousel according to any one of claims 1 - 3, **characterized in that** the shores (9) are extendable and fixable at a preselected length.

5. Cable carousel according to the preamble of claim 1 or according to any one of claims 1-4 , wherein the shores (9) connect to a connecting organ (12) which is centrally provided within the cable carousel, and the connecting organ (12) is connectable or connected to the support grid (1), **characterized in that** the locking pile (13) can be fixedly or removably mounted to the connecting organ (12).

6. Cable carousel according to the preamble of claim 1 or according to any one of claims 1-5, **characterized in that** within the support grid (1) reinforcement beams (16) are provided that are regularly distributed in a star pattern, and which star-pattern-beams (16) are connected to a central connecting point (12') within the support grid (1) and which is positioned on a virtual vertical axis which is encircled by the inner and outer barriers (7, 8).

7. Cable carousel according to claim 6, **characterized in that** the central connecting point (12') is positioned in line with and below the connecting organ (12) which is provided on the support grid (1).

8. Cable carousel according to any one of claims 4-7, **characterized in that** the inner barrier (7) is connected with horizontal beams (17) immediately above the support grid (1) to the connecting organ (12).

9. Cable carousel according to claim 8, **characterized in that** the horizontal beams (17) are provided in a star pattern above and corresponding to the star pattern of the reinforcement beams (16) within the support grid (1).

10. Cable carousel according to claim 7 or 8, **characterized in that** the horizontal beams (17) have a preselected length and their connection with the inner barrier (7) and the connecting organ (12) is dismountable.

11. Cable carousel according to any one of claims 4-10, **characterized in that** the inner barrier (7) is provided with horizontal bars (18) that are parallel to and distant from the support grid (1), and said horizontal bars (18) are connected to the locking pile (13) mounted in the connecting organ (12).

12. Cable carousel according to claim 11, **characterized in that** the horizontal bars (18) are extendable and fixable at a preselected length.

13. Cable carousel according to any one of claims 1-12, **characterized in that** the support grid (1) is assembled from bottom supports (1'), wherein said bottom supports (1') and/or the upstanding side supports (2, 2') may be assembled together with dimensions not exceeding the dimensions of a standard sea container.

14. Cable carousel according to any one of claims 1-13, **characterized in that** the support grid (1) is provided on a series of load carrying movable vehicles, preferably self-propelled modular trailers (5).

15. Vessel provided with a cable carousel according to any one of claims 1-14, **characterized in that** the vessel is provided with a yoke (15) which is equipped to receive the locking pile (13) that is provided through the aligned apertures of the connecting organ (12) and the support grid (1).
